# EUROPEAN PATENT APPLICATION

(11) **EP 2 579 373 A1**
(43) Date of publication of application: **10.04.2013**
(21) Application number: 11792244.3
(22) Date of filing: 13.05.2011
(51) Int. Cl.: H01M 8/04, H01M 8/06, H01M 8/10

(54) **OPERATION METHOD FOR FUEL CELL, AND FUEL CELL SYSTEM**

(30) Priority: 07.06.2010 JP 2010130073; 07.06.2010 JP 2010129920; 07.06.2010 JP 2010129917
(71) Applicant: Honda Motor Co., Ltd., Minato-ku Tokyo 107-8556 (JP)
(72) Inventor: CHIBA Hiroto, Wako-shi, Saitama 351-0193 (JP); IWASAWA Chikara, Wako-shi, Saitama 351-0193 (JP); MOHRI Masahiro, Wako-shi, Saitama 351-0193 (JP); OHGAMI Osamu, Wako-shi, Saitama 351-0193 (JP); UEHARA Junji, Wako-shi, Saitama 351-0193 (JP); YAMAZAKI Keiko, Wako-shi, Saitama 351-0193 (JP)
(74) Representative: Trossin, Hans-Jürgen
(86) International application number: PCT/JP2011/061027
(87) International publication number: WO 2011/155286

(57) **Abstract**

A fuel cell stack (10) is provided with a pair of refrigerant inlet ports (34a) and a pair of refrigerant outlet ports (34b). The refrigerant inlet ports (34a, 34a) are disposed in the vicinity of an oxidant gas inlet port (30a) and a fuel gas inlet port (32a) in a manner such that one of the refrigerant inlet ports (34a) is disposed on the side of the oxidant gas inlet port (30a) and the other refrigerant inlet port (34a) is disposed on the side of the fuel gas inlet port (32a). The refrigerant outlet ports (34b, 34b) are disposed in the vicinity of an oxidant gas outlet port (30b) and a fuel gas outlet port (32b) in a manner such that one of the refrigerant outlet ports (34b) is disposed on the side of the oxidant gas outlet port (30b) and the other refrigerant outlet port (34b) is disposed on the side of the fuel gas outlet port (32b). The operation method involves a step for detecting whether or not, at minimum, a portion of a fuel gas path is blocked by water, and a step for preventing a refrigerant from flowing into the refrigerant outlet port (34b) disposed in the vicinity of the fuel gas outlet port (32b) when it is determined that, at minimum, a portion of the fuel gas path is blocked by water.

## Description

### Technical Field

The present invention relates to an operation method for a fuel cell formed by stacking an electrolyte electrode assembly and a separator having rectangular flat surfaces. The electrolyte electrode assembly includes a pair of electrodes and an electrolyte interposed between the electrodes. Further, the present invention relates to a fuel cell system.

### Background Art

For example, a solid polymer electrolyte fuel cell employs a solid polymer electrolyte membrane. The electrolyte membrane is a polymer ion exchange membrane, and interposed between an anode and a cathode to form a membrane electrode assembly (MEA). The membrane electrode assembly and a pair of separators sandwiching the membrane electrode assembly make up a unit cell (power generation unit) for generating electricity. A plurality of unit cells are stacked together to form a fuel cell stack, e.g., mounted in a vehicle.

In the fuel cell, a fuel gas flow field (reactant gas flow field) is formed on a surface of one of adjacent separators that faces the anode, for allowing fuel gas to flow along the fuel gas flow field, and an oxygen-containing gas flow field (reactant gas flow field) is formed on a surface of the other of the adjacent separators that faces the cathode, for allowing oxygen-containing gas to flow along the oxygen-containing gas flow field. Further, a coolant flow field is formed between adjacent separators for allowing a coolant to flow along surfaces of the separators.

In the fuel cell, in order to maintain a desired humidified state of the solid polymer electrolyte membrane, the oxygen-containing gas and the fuel gas supplied to the fuel cell are humidified beforehand, and water is produced in power generation reaction. Thus, condensation of the water produced in the power generation reaction may occur undesirably in the reactant gas flow field.

In the fuel gas flow field, the water produced in the oxygen-containing gas flow field permeates through the thin solid polymer electrolyte membrane, and the water tends to be diffused backward. Therefore, the membrane electrode assembly is partially clogged with the dew condensation water, and power generation cannot be performed in the clogged portion. The temperature in the area of the oxygen-containing gas flow field on the downstream side corresponding to the clogged portion is decreased, and the dew condensation may occur. Further, the area of the oxygen-containing gas flow field on the downstream side is clogged with water, and the water produced in the oxygen-containing gas flow field may not be diffused backward to the fuel gas flow field. Thus, the water may be retained as stagnant water also on the downstream side of the oxygen-containing gas flow field undesirably.

Some fuel cells adopt the so-called skip cooling structure where the coolant flow fields are formed at intervals of a certain number of unit cells. In the structure, the temperature in the fuel gas flow field provided in the unit cell adjacent to the coolant flow field may be decreased significantly, and the condensed water may be retained easily as stagnant water.

As a result, the fuel gas flow field may be clogged with the stagnant water undesirably, and the flow of the fuel gas becomes non-uniform (so-called flooding occurs). Consequently, a desired power generation performance cannot be achieved. Further, also in the oxygen-containing gas flow field, clogging of the flow field may occur undesirably.

In this regard, for example, a fuel cell system disclosed in Japanese Laid-Open Patent Publication No. 2004-185938 is known. As shown in FIG. 15, in the fuel cell system, an air humidifier 2 is connected to a heat medium discharge port 1a of a fuel cell 1, and a fuel humidifier 3 is connected to the air humidifier 2. A heat exchanger 4 is connected to the fuel humidifier 3, and a heat medium supply port 1b of the fuel cell 1 is connected to the heat exchanger 4 to form a water circulation channel 5 for water as heat medium.

A total heat exchanger 6 is connected to an oxygen-containing gas discharge port 1c of the fuel cell 1, and the air humidifier 2 is connected to the total heat exchanger 6. An oxygen-containing gas supply port 1d of the fuel cell 1 is connected to the air humidifier 2 to form an air supply channel 7 for air as the oxygen-containing gas.

A fuel reformer 8 is connected to the fuel humidifier 3, and produces reformed gas chiefly containing hydrogen using raw fuel such as the city gas. After this reformed gas is humidified by the fuel humidifier 3, the humidified reformed gas is supplied to a fuel supply port 1e of the fuel cell 1.

Thus, in an inlet area of the reactant gas, if the dew point of the reactant gas is set to be lower than the temperature of the heat medium (water discharged from the fuel cell 1), the reactant gas is heated in the inlet area by the heat medium. According to the disclosure, in the structure, it becomes possible to prevent condensation of water vapor in the humidified reactant gas in the inlet area, and the reactant gas can stat to flow smoothly without any condensed water retained in the inlet area.

### Summary of Invention

In the fuel cell system, in an outlet area of the reactant gas, the dew point of the reactant gas is set to be higher than the temperature of the heat medium. Therefore, the reactant gas is cooled by the heat medium in the outlet area, and condensation of the water vapor in the reactant gas may occur. However, according to the disclosure, the water droplets can be ejected easily under the pressure applied uniformly to each heat medium flow field, and the condensed water can be discharged into an outlet header area in a short period of time.

However, in the outlet area of the reactant gas, the reactant gas is consumed in the reaction. Therefore, the condensed water may not be discharged suitably from the outlet area of the reactant gas into the outlet header area. In particular, during low load power generation, the flow rate of the reactant gas is small, and removal of the condensed water becomes difficult. Since a large amount of the condensed water is produced easily due to the decrease in the temperature, water may be retained as stagnant water undesirably.

The present invention has been made to solve the problems of this type, and an object of the present invention is to provide an operation method for a fuel cell, and a fuel cell system in which it is possible to reliably prevent condensed water from being retained as stagnant water in a reactant gas flow field, and a desired power generation state is achieved.

The present invention relates to an operation method for a fuel cell formed by stacking an electrolyte electrode assembly and a separator having rectangular flat surfaces in a stacking direction. The electrolyte electrode assembly includes a pair of electrodes and an electrolyte interposed between the electrodes. A reactant gas supply passage and a reactant gas discharge passage extend through one pair of two opposite sides of the separator in the stacking direction, the reactant gas supply passage and the reactant gas discharge passage being connected to a reactant gas flow field for allowing a reactant gas to flow along an electrode surface. A pair of coolant supply passages and a pair of coolant discharge passages for allowing a coolant to flow therethrough extend through the other pair of two opposite sides of the separator at least at positions adjacent to the reactant gas supply passage or the reactant gas discharge passage, the pair of coolant supply passages are disposed separately on the two opposite sides, and the pair of coolant discharge passages are disposed separately on the two opposite sides.

The operation method includes the steps of: detecting whether or not at least a portion of a fuel gas flow field serving as the reactant gas flow field where a fuel gas as the reactant gas flows has been clogged with water; and if it is determined that at least a portion of the fuel gas flow field has been clogged with the water, limiting the flow of the coolant to the coolant discharge passage adjacent to the reactant gas discharge passage.

Further, the present invention relates to an operation method for a fuel cell and a fuel cell system including the fuel cell. The fuel cell is formed by stacking an electrolyte electrode assembly and a separator having rectangular flat surfaces in a stacking direction. The electrolyte electrode assembly includes a pair of electrodes and an electrolyte interposed between the electrodes. A reactant gas supply passage and a reactant gas discharge passage extend through one pair of two opposite sides of the separator in the stacking direction, the reactant gas supply passage and the reactant gas discharge passage being connected to a reactant gas flow field for allowing a reactant gas to flow along an electrode surface. At least a pair of coolant supply passages and at least a pair of coolant discharge passages for allowing a coolant to flow therethrough extend through the other pair of two opposite sides of the separator in the stacking direction at least at positions adjacent to the reactant gas supply passage or the reactant gas discharge passage, the pair of coolant supply passages are disposed separately on the two opposite sides, and the pair of coolant discharge passages are disposed separately on the two opposite sides.

The operation method includes the steps of: detecting whether or not at least a portion of the reactant gas flow field has been clogged with water; and if it is determined that at least a portion of the reactant gas flow field has been clogged with the water, at least implementing control to supply the coolant to the coolant supply passages at different flow rates or discharge the coolant from the coolant discharge passages at different flow rates.

Further, the fuel cell system includes a first supply channel and a first discharge channel connected respectively to the coolant supply passage and the coolant discharge passage that are disposed on a first side of the other pair of two opposite sides of the separator, a second supply channel and a second discharge channel connected respectively to the coolant supply passage and the coolant discharge passage that are disposed on a second side of the other pair of two opposite sides of the separator, a first branch channel connected to a middle portion of the first supply channel and a middle portion of the first discharge channel, a second branch channel connected to a middle portion of the second supply channel and a middle portion of the second discharge channel, valve mechanisms provided at least in the first branch channel and the second branch channel, respectively, and a controller for determining whether or not at least a portion of the reactant gas flow field has been clogged with water.

In the present invention, if it is determined that at least a portion of the fuel gas flow field has been clogged with water, the flow of the coolant in the coolant discharge passage adjacent to the reactant gas discharge passage is limited.

Thus, in the power generation surface, the flow rate of the coolant flowing in the area adjacent to the reactant gas discharge passage is reduced, and the temperature in the area adjacent to the reactant gas discharge passage is increased. Thus, the condensed water retained as stagnant water in the area adjacent to the reactant gas discharge passage is discharged easily and suitably, and it is possible to remove the stagnant water.

Accordingly, in particular, during low load power generation, it becomes possible to reliably prevent the condensed water from being retained as stagnant water in the area adjacent to the reactant gas discharge passage such as the fuel gas discharge passage, and a desired power generation state is achieved.

Further, in the present invention, if it is determined that at least a portion of the fuel gas flow field on the downstream side has been clogged with water, control at least to supply the coolant to the coolant supply passages at different flow rates or discharge the coolant from the coolant discharge passages at different flow rates is implemented.

Thus, in the power generation surface, the flow of the coolant can be limited depending on a portion where the condensed water is produced. Thus, it is possible to reliably prevent the condensed water from being retained as stagnant water in the reactant gas flow field, and a desired power generation state is achieved.

Further, in the present invention, if it is determined that at least a portion of the reactant gas flow field has been clogged with water, the valve mechanisms opens, e.g., the first branch cannel and the second branch channel. Therefore, by bypassing operation, the coolant chiefly flows from the middle portions of the first supply channel and the second supply channel to the first branch channel and the second branch channel, and then, flows into the first discharge channel and the second discharge channel. Thus, it is possible to limit the flow of the coolant through the coolant flow field in the fuel cell.

Therefore, it is possible to increase the temperature of the fuel cell, and the condensed water retained as stagnant water in the reactant gas flow field is evaporated, and removed from the reactant gas flow field. As a result, the condensed water retained as stagnant water in the area adjacent to the reactant gas discharge passage can be discharged easily and suitably, and it is possible to remove the stagnant water.

Accordingly, in particular, during low load power generation, it is possible to reliably prevent the condensed water from being retained as stagnant water in the area adjacent to the reactant gas discharge passage, and a suitable power generation state is achieved.

### Brief Description of Drawings

FIG. 1 is a diagram schematically showing a fuel cell system including a fuel cell stack to which an operation method according to a first embodiment of the present invention is applied;
FIG. 2 is an exploded perspective view showing main components of a power generation unit of the fuel cell stack;
FIG. 3 is a cross sectional view showing the fuel cell stack;
FIG. 4 is a front view showing a first separator of the power generation unit;
FIG. 5 is a diagram showing flows of a coolant for illustration of the operation method;
FIG. 6 is a diagram showing flows of the coolant for illustration of the operation method;
FIG. 7 is a view showing the state where stagnant water is produced on the downstream side of a first fuel gas flow field;
FIG. 8 is a diagram showing the flows of a coolant for illustration of the operation method;
FIG. 9 is a diagram showing the flows of the coolant for illustration of the operation method;
FIG. 10 is a diagram schematically showing a fuel cell system including a fuel cell stack to which operation methods according to first and second embodiments of the present invention are applied;
FIG. 11 is a diagram schematically showing a fuel cell system including a fuel cell stack to which an operation method according to a third embodiment of the present invention is applied;
FIG. 12 is a diagram showing flows of a coolant for illustration of the operation method;
FIG. 13 is a diagram showing flows of the coolant for illustration of the operation method;
FIG. 14 is a diagram showing flows of the coolant for illustration of the operation method; and

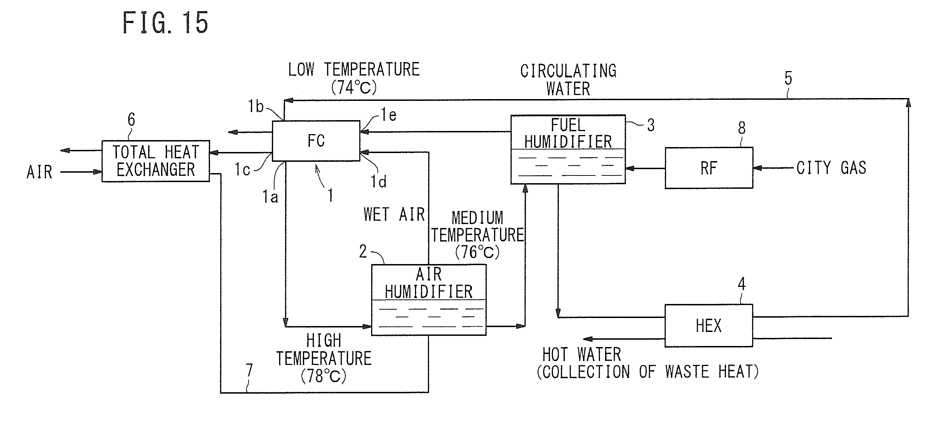

FIG. 15 is a diagram showing a fuel cell system disclosed in Japanese Laid-Open Patent Publication No. 2004-185938.

### Description of Embodiments

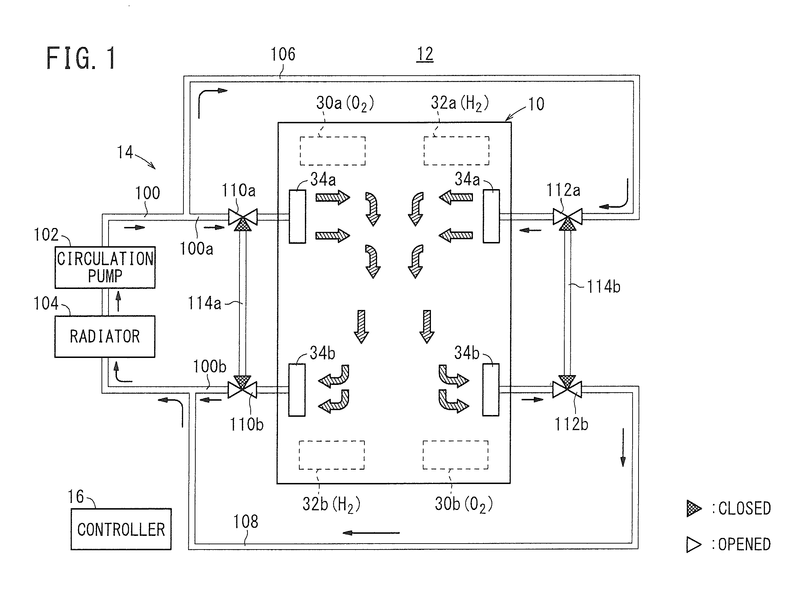

As shown in FIG. 1, a fuel cell stack (fuel cell) 10 to which an operation method according to a first embodiment of the present invention is applied is included in a fuel cell system 12. For example, the fuel cell system 12 is used in an automobile application, and mounted in a vehicle (not shown).

The fuel cell system 12 includes an oxygen-containing gas supply apparatus (not shown) for supplying an oxygen-containing gas to the fuel cell stack 10, a fuel gas supply apparatus (not shown) for supplying a fuel gas to the fuel cell stack 10, a coolant supply apparatus 14 for supplying a coolant to the fuel cell stack 10, and a controller 16 for controlling the fuel cell system 12 as a whole.

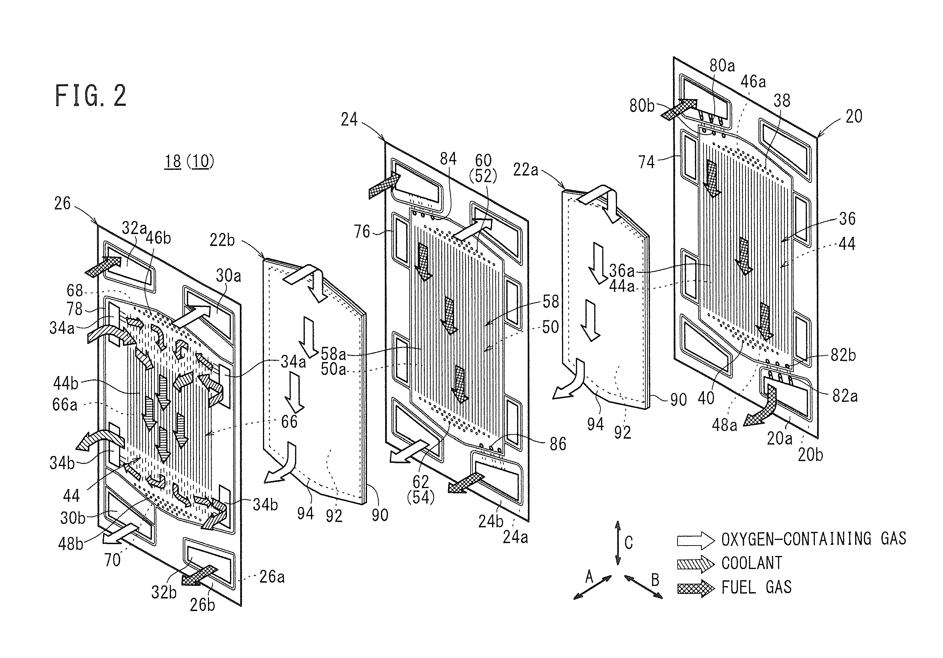

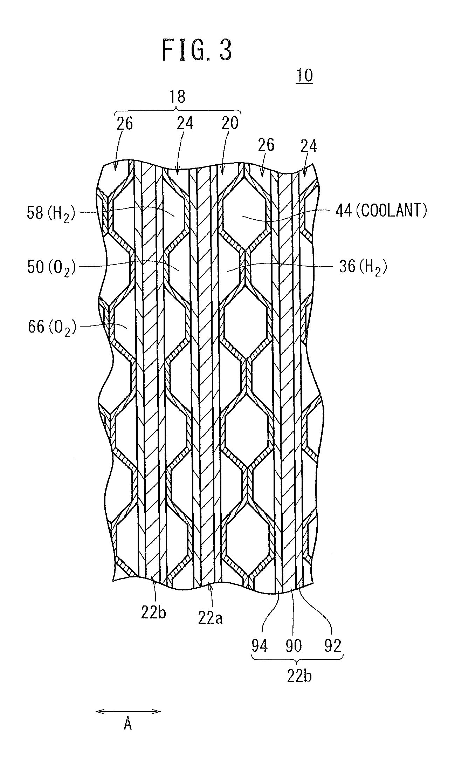

As shown in FIGS. 2 and 3, the fuel cell stack 10 is formed by stacking a plurality of power generation units 18 in a horizontal direction indicated by an arrow A. Each of the power generation units 18 is elongated in a longitudinal direction, and includes a first separator 20, a first membrane electrode assembly (electrolyte electrode assembly) (MEA) 22a, a second separator 24, a second membrane electrode assembly (electrolyte electrode assembly) (MEA) 22b, and a third separator 26. For example, the first separator 20, the second separator 24, and the third separator 26 are metal separators. Alternatively, for example, carbon separators may be used as the first separator 20, the second separator 24, and the third separator 26.

In the illustrated embodiment, the power generation unit 18 includes the three separators and the two membrane electrode assemblies. However, the present invention is not limited in this respect. For example, the power generation unit 18 may include four separators and three membrane electrode assemblies.

As shown in FIG. 2, at an upper end portion of the power generation unit 18 in the longitudinal direction indicated by an arrow C, an oxygen-containing gas supply passage 30a for supplying the oxygen-containing gas, and a fuel gas supply passage 32a for supplying the fuel gas such as a hydrogen-containing gas are provided. The oxygen-containing gas supply passage 30a and the fuel gas supply passage 32a extend through the power generation unit 18 in the direction indicated by the arrow A.

At a lower end portion of the power generation unit 18 in the longitudinal direction indicated by the arrow C, a fuel gas discharge passage 32b for discharging the fuel gas and an oxygen-containing gas discharge passage 30b for discharging the oxygen-containing gas are provided. The fuel gas discharge passage 32b and the oxygen-containing gas discharge passage 30b extend through the power generation unit 18 in the direction indicated by the arrow A.

At upper positions on both sides of the power generation unit 18 in a lateral direction indicated by an arrow B, at least a pair of coolant supply passages 34a for supplying the coolant are provided. At lower positions on both sides of the power generation unit 18 in the lateral direction, at least a pair of coolant discharge passages 34b for discharging the coolant are provided. The coolant supply passages 34a and the coolant discharge passages 34b extend through the power generation unit 18 in the direction indicated by the arrow A.

The coolant supply passages 34a are positioned adjacent to the oxygen-containing gas supply passage 30a and the fuel gas supply passage 32a on both sides in the direction indicated by the arrow B respectively. The coolant discharge passages 34b are positioned adjacent to the oxygen-containing gas discharge passage 30b and the fuel gas discharge passage 32b on both sides in the direction indicated by the arrow B respectively. Three or more coolant supply passages 34a and three or more coolant discharge passages 34b may be provided.

The first separator 20 has a first fuel gas flow field 36 on its surface 20a facing the first membrane electrode assembly 22a. The first fuel gas flow field 36 is connected to the fuel gas supply passage 32a and the fuel gas discharge passage 32b. The first fuel gas flow field 36 includes a plurality of flow grooves 36a extending in the direction indicated by the arrow C. An inlet buffer 38 is provided adjacent to the inlet of the first fuel gas flow field 36, and an outlet buffer 40 is provided adjacent to the outlet of the first fuel gas flow field 36. A plurality of bosses are formed on the inlet buffer 38, and a plurality of bosses are formed on the outlet buffer 40.

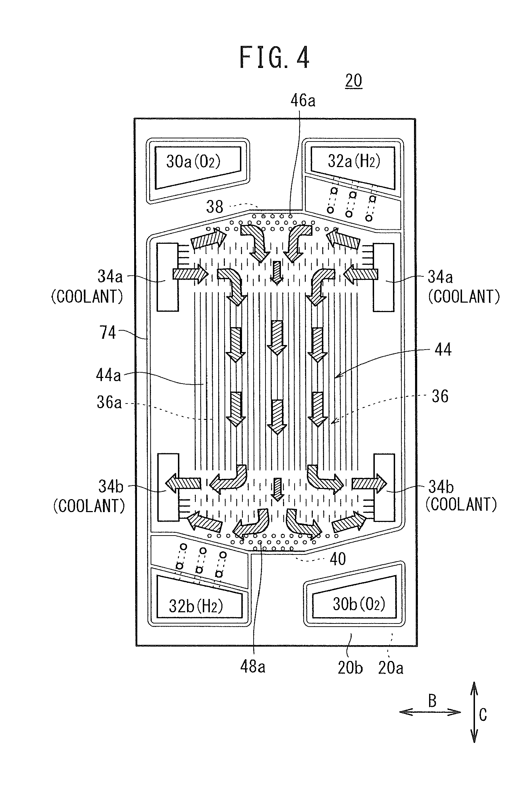

As shown in FIG. 4, a plurality of flow grooves 44a as part of the coolant flow field 44 connected to the coolant supply passages 34a and the coolant discharge passages 34b are formed on a surface 20b of the first separator 20. An inlet buffer 46a is provided adjacent to the inlet of the flow grooves 44a, and an outlet buffer 48a is provided adjacent to the outlet of the flow grooves 44a. A plurality of bosses are formed on the inlet buffer 46a, and a plurality of bosses are formed on the outlet buffer 48a.

As shown in FIG. 2, the second separator 24 has a first oxygen-containing gas flow field 50 on its surface 24a facing the first membrane electrode assembly 22a. The first oxygen-containing gas flow field 50 is connected to the oxygen-containing gas supply passage 30a and the oxygen-containing gas discharge passage 30b. The first oxygen-containing gas flow field 50 includes a plurality of flow grooves 50a extending in the direction indicated by the arrow C. An inlet buffer 52 is provided adjacent to the inlet of the first oxygen-containing gas flow field 50, and an outlet buffer 54 is provided adjacent to the outlet of the first oxygen-containing gas flow field 50.

The second separator 24 has a second fuel gas flow field 58 on its surface 24b facing the second membrane electrode assembly 22b. The second fuel gas flow field 58 is connected to the fuel gas supply passage 32a and the fuel gas discharge passage 32b. The second fuel gas flow field 58 includes a plurality of flow grooves 58a extending in the direction indicated by the arrow C. An inlet buffer 60 is provided adjacent to the inlet of the second fuel gas flow field 58, and an outlet buffer 62 is provided adjacent to the outlet of the second fuel gas flow field 58. The fuel gas flows along the first fuel gas flow field 36 and the second fuel gas flow field 58 in the direction of gravity.

The third separator 26 has a second oxygen-containing gas flow field 66 on its surface 26a facing the second membrane electrode assembly 22b. The second oxygen-containing gas flow field 66 is connected to the oxygen-containing gas supply passage 30a and the oxygen-containing gas discharge passage 30b. The second oxygen-containing gas flow field 66 includes a plurality of flow grooves 66a extending in the direction indicated by the arrow C. An inlet buffer 68 is provided adjacent to the inlet of the second oxygen-containing gas flow field 66, and an outlet buffer 70 is provided adjacent to the outlet of the second oxygen-containing gas flow field 66. The oxygen-containing gas flows along the first oxygen-containing gas flow field 50 and the second oxygen-containing gas flow field 66 in the direction of gravity.

A plurality of flow grooves 44b as part of the coolant flow field 44 are formed on a surface 26b of the third separator 26. An inlet buffer 46b is provided adjacent to the inlet of the flow grooves 44b, and an outlet buffer 48b is provided adjacent to the outlet of the flow grooves 44b. A plurality of bosses are formed on the inlet buffer 46b, and a plurality of bosses are formed on the outlet buffer 48b.

A first seal member 74 is formed integrally with each surface 20a, 20b of the first separator 20, around the outer circumferential end portion of the first separator 20. Alternatively, a member separate from the first separator 20 may be provided as the first seal member 74 on each surface 20a, 20b of the first separator 20. A second seal member 76 is formed integrally with each surface 24a, 24b of the second separator 24, around the outer circumferential end portion of the second separator 24. Alternatively, a member separate from the second separator 24 may be provided as the second seal member 76 on each surface 24a, 24b of the second separator 24. A third seal member 78 is formed integrally with each surface 26a, 26b of the third separator 26, around the outer circumferential end portion of the third separator 26. Alternatively, a member separate from the third separator 26 may be provided as the third seal member 78 on each surface 26a, 26b of the third separator 26.

The first separator 20 includes outer supply holes 80a and inner supply holes 80b connecting the fuel gas supply passage 32a and the first fuel gas flow field 36, and outer discharge holes 82a and inner discharge holes 82b connecting the fuel gas discharge passage 32b and the first fuel gas flow field 36.

The second separator 24 includes supply holes 84 connecting the fuel gas supply passage 32a and the second fuel gas flow field 58, and discharge holes 86 connecting the fuel gas discharge passage 32b and the second fuel gas flow field 58.

The power generation units 18 are stacked together, and the coolant flow field 44 is formed between the first separator 20 of one of the power generation units 18 that are adjacent to each other and the third separator 26 of the other of the adjacent power generation units 18. The coolant flow field 44 extends in the direction indicated by the arrow B.

As shown in FIG. 2, the surface area of the first membrane electrode assembly 22a is smaller than the surface area of the second membrane electrode assembly 22b. Each of the first and second membrane electrode assemblies 22a, 22b includes an anode 92, a cathode 94, and a solid polymer electrolyte membrane (electrolyte) 90 interposed between the anode 92 and the cathode 94. The solid polymer electrolyte membrane 90 is formed by impregnating a thin membrane of perfluorosulfonic acid with water, for example. The surface area of the anode 92 is smaller than the surface area of the cathode 94. It is called a stepped-type MEA.

Each of the anode 92 and the cathode 94 has a gas diffusion layer (not shown) such as a carbon paper, and an electrode catalyst layer (not shown) of platinum alloy supported on porous carbon particles. The carbon particles are deposited uniformly on the surface of the gas diffusion layer. The electrode catalyst layer of the anode 92 and the electrode catalyst layer of the cathode 94 are fixed to both surfaces of the solid polymer electrolyte membrane 90, respectively.

As shown in FIG. 1, the coolant supply apparatus 14 includes a coolant circulation channel 100, and a circulation pump 102 and a radiator 104 having a tank are provided in the coolant circulation channel 100. The coolant circulation channel 100 includes a supply channel 100a connected to a branch supply channel 106 and a discharge channel 100b connected to a branch discharge channel 108.

The supply channel 100a and the discharge channel 100b are connected to the coolant supply passage 34a and the coolant discharge passage 34b provided on one of long sides through three-way valves 110a, 110b, respectively. The branch supply channel 106 and the branch discharge channel 108 are connected to the coolant supply passage 34a and the coolant discharge passage 34b provided on the other of the long sides through three-way valves 112a, 112b, respectively. A branch channel 114a is connected between the three-way valves 110a, 110b, and a branch channel 114b is connected between the three-way valves 112a, 112b.

Instead of the three-way valves 110a, 110b, 112a, and 112b, variable valves (not shown) with adjustable opening angle, i.e., capable of regulating the flow rate of the coolant may be used. Further, the variable valve may be provided in any one of the pair of coolant supply passages 34a and the pair of coolant discharge passages 34b.

The controller 16 is capable of detecting whether or not at least a portion of the first fuel gas flow field 36 (e.g., an end of the first fuel gas flow field 36 on the downstream side adjacent to the fuel gas discharge passage 32b or the oxygen-containing gas discharge passage 30b) has been clogged with water. The determination of whether or not water clogging has occurred is made, for example, by performing CDD (current density distribution) measurement on the power generation surface. If electrical current is concentrated on the power generation surface or in an upper area of the power generation surface, it is determined that water is retained as stagnant water at least in a portion of the first fuel gas flow field 36.

Further, the cell voltage in the fuel cell stack 10 may be detected. In this case, upon detection of decrease in the cell voltage, it is determined that water is retained as stagnant water at least in a portion of the first fuel gas flow field 36.

Further, the electric potential at the anode can be measured by a plurality of potential sensors disposed in the power generation surface. In this case, it is possible to determine that hydrogen shortage, i.e., water clogging, has occurred in a portion where the electric potential of the anode is increased.

Further, whether or not water clogging has occurred may be determined by detecting pressure loss or the like in the fuel gas. Alternatively, whether or not water has been retained as stagnant water may be determined by storing data of the optimum flow distribution for each load, and mapping based on the stored data.

Operation of the fuel cell stack 10 having the above structure will be described below in relation to an operation method according to the first embodiment.

Firstly, an oxygen-containing gas is supplied to the oxygen-containing gas supply passage 30a, and a fuel gas such as a hydrogen-containing gas is supplied to the fuel gas supply passage 32a. Further, a coolant such as pure water, ethylene glycol, oil, or the like is supplied to the pair of coolant supply passages 34a.

Thus, the oxygen-containing gas flows from the oxygen-containing gas supply passage 30a to the first oxygen-containing gas flow field 50 of the second separator 24 and the second oxygen-containing gas flow field 66 of the third separator 26. The oxygen-containing gas moves along the first oxygen-containing gas flow field 50 in the direction of gravity indicated by the arrow C, and the oxygen-containing gas is supplied to the cathode 94 of the first membrane electrode assembly 22a. Further, the oxygen-containing gas moves along the second oxygen-containing gas flow field 66 in the direction indicated by the arrow C, and the oxygen-containing gas is supplied to the cathode 94 of the second membrane electrode assembly 22b.

In the meanwhile, the fuel gas flows from the fuel gas supply passage 32a through the outer supply holes 80a to the surface 20b of the first separator 20. Further, after the fuel gas flows from the inner supply holes 80b to the surface 20a, the fuel gas flows along the first fuel gas flow field 36 in the direction of gravity indicated by the arrow C, and the fuel gas is supplied to the anode 92 of the first membrane electrode assembly 22a.

Further, the fuel gas flows through the supply holes 84 to the surface 24b of the second separator 24. Then, the fuel gas flows along the second fuel gas flow field 58 on the surface 24b in the direction indicated by the arrow C, and the fuel gas is supplied to the anode 92 of the second membrane electrode assembly 22b.

Thus, in each of the first and second membrane electrode assemblies 22a, 22b, the oxygen-containing gas supplied to the cathode 94 and the fuel gas supplied to the anode 92 are consumed in the electrochemical reactions at electrode catalyst layers of the cathode 94 and the anode 92 for generating electricity.

Then, the oxygen-containing gas consumed at the cathode 94 of each of the first and second membrane electrode assemblies 22a, 22b is discharged into the oxygen-containing gas discharge passage 30b in the direction indicated by the arrow A.

After the fuel gas is consumed at the anode 92 of the first membrane electrode assembly 22a, the fuel gas flows through the inner discharge holes 82b to the surface 20b of the first separator 20. After the fuel gas reaches the surface 20b, the fuel gas flows through the outer discharge holes 82a, and moves again to the surface 20a. Then, the fuel gas is discharged into the fuel gas discharge passage 32b.

Further, the fuel gas consumed at the anode 92 of the second membrane electrode assembly 22b flows through the discharge holes 86 to the surface 24a. Then, the fuel gas is discharged into the fuel gas discharge passage 32b.

Further, as shown in FIG. 1, in the coolant supply apparatus 14, the three-way valves 110a, 110b, 112a, and 112b are operated. Thus, the supply channel 100a and the discharge channel 100b are connected respectively to the coolant supply passage 34a and the coolant discharge passage 34b provided on one of the long sides, and the branch supply channel 106 and the branch discharge channel 108 are connected respectively to the coolant supply passage 34a and the coolant discharge passage 34b provided on the other of the long sides.

Therefore, the coolant supplied to the fuel cell stack 10 is supplied to the pair of left and right coolant supply passages 34a (see FIGS. 1 and 2). The coolant flows into the coolant flow field 44 formed between the first separator 20 of one of the power generation units 18 which are adjacent to each other and the third separator 26 of the other of the adjacent power generation units 18.

As shown in FIG. 4, the pair of coolant supply passages 34a are provided separately at upper positions on both of left and right sides of the power generation unit 18, adjacent to the oxygen-containing gas supply passage 30a and the fuel gas supply passage 32a.

In the structure, the coolant from one of the coolant supply passages 34a and the coolant from the other of the coolant supply passages 34a are supplied to the coolant flow field 44 in the direction indicated by the arrow B, and move toward each other. After the coolants moving toward each other collide with each other at the center of the coolant flow field 44 in the direction indicated by the arrow B, the coolants move in the direction of gravity (in the downward direction indicated by the arrow C). Then, the coolants are discharged into the coolant discharge passages 34b provided separately at lower positions on both sides of the power generation unit 18.

In the first embodiment, the controller 16 detects whether or not at least a portion of the first fuel gas flow field 36 (in particular, an end of the first fuel gas flow field 36 on the downstream side adjacent to the fuel gas discharge passage 32b) has been clogged with water. It is because, in the first fuel gas flow field 36, water produced in the first oxygen-containing gas flow field 50 tends to permeate through the thin solid polymer electrolyte membrane 90, and the produced water tends to be diffused backward easily. Further, it is because, as shown in FIG. 3, since the first fuel gas flow field 36 is adjacent to the coolant flow field 44, in particular, during low load power generation, the temperature of the first fuel gas flow field 36 is decreased significantly, and the condensed water tends to be retained easily as stagnant water.

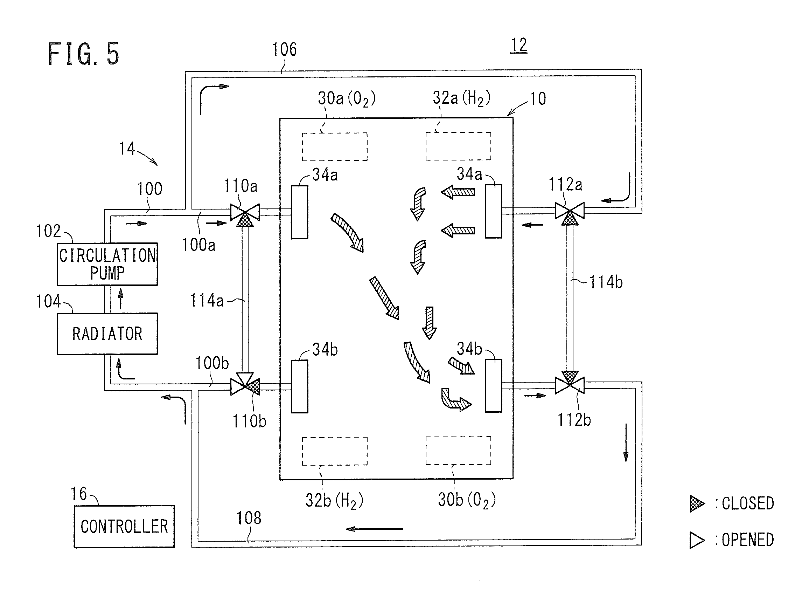

Thus, if it is determined that at least a portion of the first fuel gas flow field 36 has been clogged with water, the controller 16 operates the three-way valve 110b to disconnect the discharge channel 100b from the coolant discharge passage 34b (see FIG. 5). Therefore, it becomes possible to limit the flow of the coolant in the coolant discharge passage 34b adjacent to the fuel gas discharge passage 32b.

Thus, in the power generation surface, the flow rate of the coolant flowing in an area adjacent to the fuel gas discharge passage 32b is reduced, and it is possible to increase the temperature in the area adjacent to the fuel gas discharge passage 32b. Thus, the condensed water which is retained as stagnant water in the area adjacent to the fuel gas discharge passage 32b is discharged easily and suitably, and it is possible to remove the stagnant water.

Accordingly, in particular, during low load power generation, it is possible to reliably prevent the condensed water from being retained as stagnant water in the area adjacent to the fuel gas discharge passage 32b, and a desired power generation state is achieved advantageously.

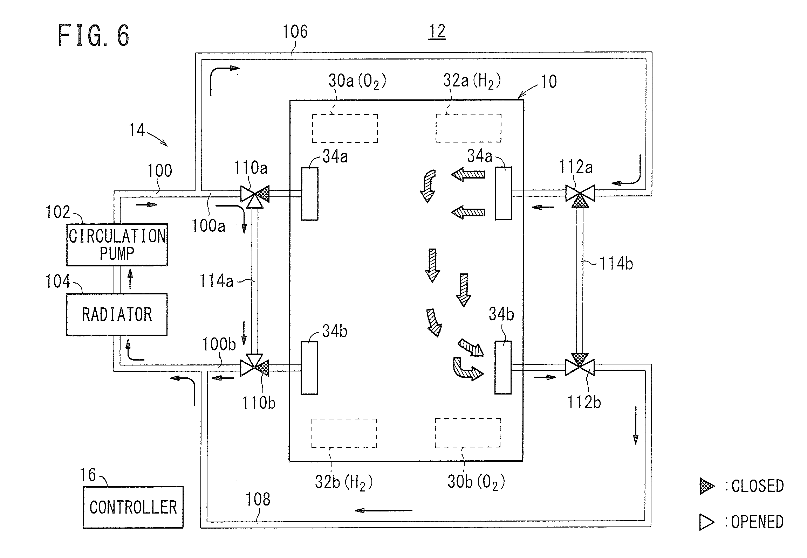

Further, in the first embodiment, the three-way valves 110a and 110b may be operated as shown in FIG. 6 if it is determined that at least a portion of the first fuel gas flow field 36 has been clogged with water.

That is, the supply channel 100a is disconnected from the coolant supply passage 34a by the three-way valve 110a, and the discharge channel 100b is disconnected from the coolant discharge passage 34b by the three-way valve 110b.

Therefore, the supply channel 100a and the discharge channel 100b are connected to the branch channel 114a bypassing the coolant flow field 44. In the structure, the coolant flows from the supply channel 100a through the branch channel 114a, and then, the coolant is discharged into the discharge channel 100b. Thus, in the power generation surface, the coolant is restricted from flowing through one of the long sides where the oxygen-containing gas supply passage 30a and the fuel gas discharge passage 32b are provided.

Thus, in the power generation surface, the coolant flows along the other of the long sides where the fuel gas supply passage 32a and the oxygen-containing gas discharge passage 30b are provided, and it is possible to increase the temperature in the area adjacent to the fuel gas discharge passage 32b. Thus, the same advantages as described above are obtained. For example, in particular, during low load power generation, it is possible to reliably prevent the condensed water from being retained as stagnant water in the area adjacent to the fuel gas discharge passage 32b, and a desired power generation state is achieved.

Next, an operation method according to a second embodiment of the present invention will be described using a fuel cell stack 10.

In the second embodiment, the controller 16 detects whether or not at least a portion of the first fuel gas flow field 36 on the downstream side (in particular, an end of the first fuel gas flow field 36 adjacent to the oxygen-containing gas discharge passage 30b) has been clogged with water.

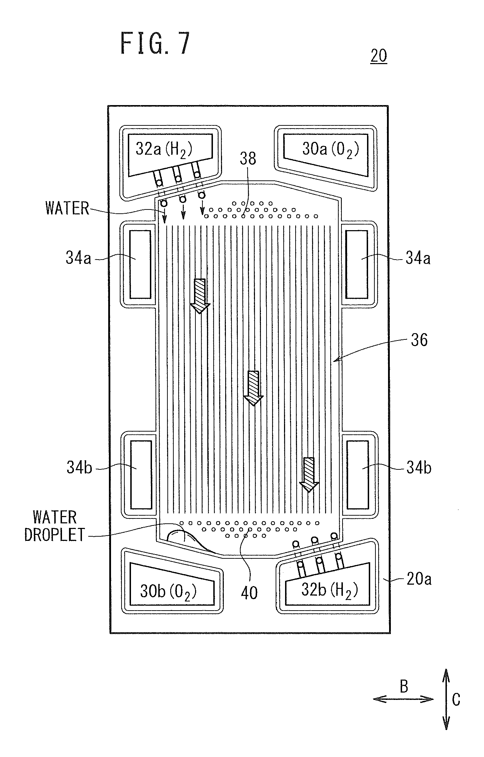

As shown in FIG. 7, in the first fuel gas flow field 36, the humidified fuel gas is supplied to the fuel gas supply passage 32a, and the dew condensation water flows into the first fuel gas flow field 36 easily depending on the degree of humidification or the like. The dew condensation water flows in the direction of gravity, and tends to be retained as stagnant water easily in a portion of the first fuel gas flow field 36 on the downstream side, specifically, in the area adjacent to (above) the oxygen-containing gas discharge passage 30b. Moreover, as shown in FIG. 3, since the first fuel gas flow field 36 is adjacent to the coolant flow field 44, in particular, during low load power generation, the temperature of the first fuel gas flow field 36 is decreased significantly, and the condensed water tends to be retained as stagnant water easily.

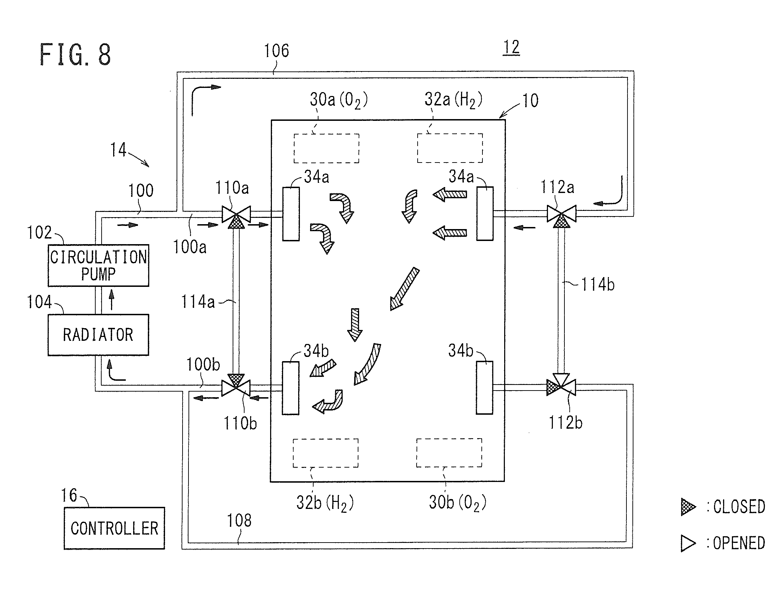

Therefore, if it is determined that at least a portion of the first fuel gas flow field 36 on the downstream side has been clogged with water, the controller 16 operates the three-way valve 112b to disconnect the coolant discharge passage 34b from the branch discharge channel 108 (see FIG. 8). Accordingly, it becomes possible to limit the flow of the coolant in the coolant discharge passage 34b adjacent to the oxygen-containing gas discharge passage 30b.

Thus, in the power generation surface, the flow rate of the coolant flowing in the area adjacent to the oxygen-containing gas discharge passage 30b is reduced, and it is possible to increase the temperature in the area adjacent to the oxygen-containing gas discharge passage 30b. Thus, in the first fuel gas flow field 36, the condensed water retained as stagnant water in the area adjacent to the oxygen-containing gas discharge passage 30b is discharged easily and suitably, and it becomes possible to remove the stagnant water.

Accordingly, in particular, during low load power generation, in the first fuel gas flow field 36, it is possible to reliably prevent the condensed water from being retained as stagnant water in the area adjacent to the oxygen-containing gas discharge passage 30b. Thus, a desired power generation state is achieved, and it is possible to effectively suppress the stagnant water from being produced on the downstream side of the first oxygen-containing gas flow field 50 advantageously.

Also in the second fuel gas flow field 58, the stagnant water tends to be produced easily in the area adjacent to the oxygen-containing gas discharge passage 30b depending on the degree of humidification of the fuel gas or the like. In an attempt to address the problem, in the second embodiment, as described above, the flow of the coolant in the coolant discharge passage 34b adjacent to the oxygen-containing gas discharge passage 30b is limited. Therefore, the condensed water which is retained as stagnant water on the downstream side of the second fuel gas flow field 58 is discharged easily and suitably, and it is possible to remove the stagnant water.

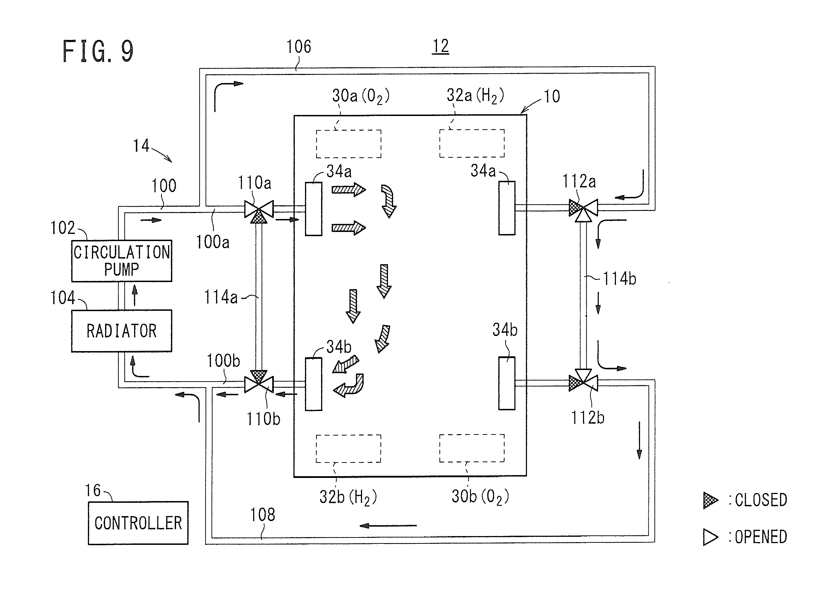

Further, in the second embodiment, the three-way valves 112a and 112b may be operated as shown in FIG. 9 if it is determined that at least a portion of the first fuel gas flow field 36 on the downstream side has been clogged with water.

That is, the branch supply channel 106 is disconnected from the coolant supply passage 34a by the three-way valve 112a, and the branch discharge channel 108 is disconnected from the coolant discharge passage 34b by the three-way valve 112b.

Thus, the branch supply channel 106 and the branch discharge channel 108 are connected to the branch channel 114b bypassing the coolant flow field 44. In the structure, the coolant flows from the branch supply channel 106 through the branch channel 114b, and then, the coolant is discharged into the branch discharge channel 108. Thus, in the power generation surface, it is possible to reliably limit the flow of the coolant through the other long side where the fuel gas supply passage 32a and the oxygen-containing gas discharge passage 30b are provided.

Thus, in the power generation surface, it is possible to increase the temperature in the area adjacent to the oxygen-containing gas discharge passage 30b further rapidly, and increase the temperature in the area on the downstream side of the first fuel gas flow field 36 and adjacent to the oxygen-containing gas discharge passage 30b. Accordingly, the same advantages as described above can be obtained. For example, in particular, during low load power generation, it is possible to reliably prevent the condensed water from being retained as stagnant water in the area on the downstream of the first fuel gas flow field 36, and a desired power generation state is achieved.

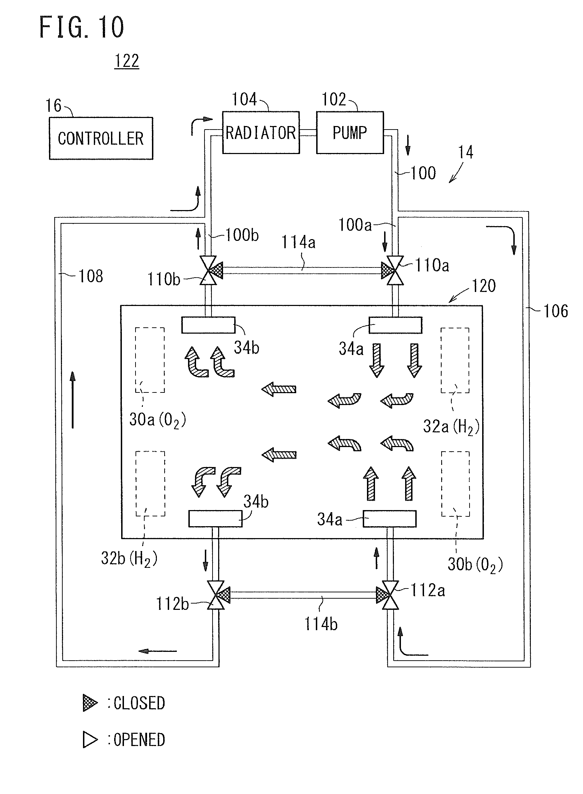

FIG. 10 is a diagram schematically showing a fuel cell system 122 including a fuel cell stack (fuel cell) 120 to which operation methods according to first and second embodiments of the present invention are applied.

The constituent elements that are identical to those of the fuel cell system 12 according to the first embodiment are labeled with the same reference numerals, and description thereof will be omitted. Also in a third embodiment as described later, the constituent elements that are identical to those of the fuel cell system 12 according to the first embodiment are labeled with the same reference numerals, and description thereof will be omitted.

The fuel cell 120 has a laterally elongated shape, and the fuel gas and the oxygen-containing gas flow in a horizontal direction perpendicular to the vertical direction. In this case, when power generation of the fuel cell 120 is performed for a long period of time in the low load state, water tends to be retained easily as stagnant water on the upper side of the MEA. Therefore, by operating the three-way valves 110a and 110b to reduce the flow rate of the coolant flowing on the upper side of the flow field, the water can be discharged from the upper side of the MEA smoothly.

During the transition period of power generation, the water tends to be retained easily as stagnant water in the flow field on the lower side of the MEA, e.g., due to injection of water from the fluid passage into the fluid flow field. Therefore, during power generation after the transition period, by operating the three-way valves 112a and 112b, it becomes possible to smoothly discharge the water from the lower side of the MEA.

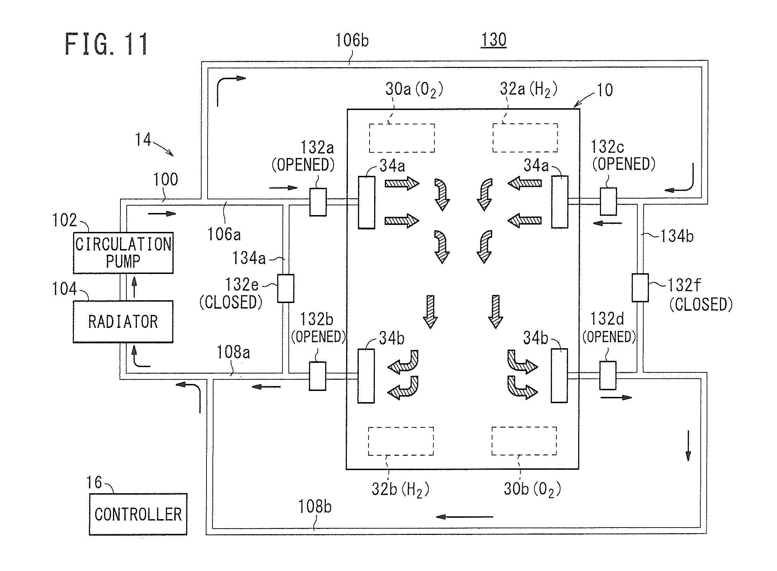

FIG. 11 is a diagram schematically showing a fuel cell system 130 to which an operation method according to the third embodiment of the present invention is applied. Though the fuel cell system 130 uses the fuel cell 10, the present invention is not limited in this respect. For example, the fuel cell 120 may be used.

In a coolant circulation channel 100 of the fuel cell system 130, a second supply channel 106b is branched from a first supply channel 106a, and a second discharge channel 108b is branched from a first discharge channel 108a.

The first supply channel 106a and the first discharge channel 108a are connected to the coolant supply passage 34a and the coolant discharge passage 34b provided on one of long sides (first side) through variable throttle valves (valve mechanisms) 132a, 132b, respectively. The second supply channel 106b and the second discharge channel 108b are connected to the coolant supply passage 34a and the coolant discharge passage 34b provided on the other of the long sides (second side) through variable throttle valves (valve mechanisms) 132c, 132d, respectively.

A first branch channel 134a is connected to a middle portion of the first supply channel 106a and a middle portion of the first discharge channel 108a, and a second branch channel 134b is connected to a middle portion of the second supply channel 106b and a middle portion of the second discharge channel 108b. A variable throttle valve (valve mechanism) 132e is connected to the first branch channel 134a, and a variable throttle valve (valve mechanism) 132f is connected to the second branch channel 134b.

In the third embodiment, the variable throttle valves 132a to 132f are used. However, the number of valves may be increased or decreased as necessary. For example, only the variable throttle valves 132a and 132b may be used.

The controller 16 is capable of detecting whether or not, for example, at least a portion of the first fuel gas flow field 36 (e.g., an end of the first fuel gas flow field 36 on the downstream side adjacent to the fuel gas discharge passage 32b) and/or at least a portion of the first oxygen-containing gas flow field 50 (e.g., an end of the first oxygen-containing gas flow field 50 on the downstream side adjacent to the oxygen-containing gas discharge passage 30b) has been clogged with water.

Operation of the fuel cell system 130 having the above structure will be described in relation to an operation method according to the third embodiment of the present invention.

The controller 16 detects, for example, whether or not at least a portion of the first fuel gas flow field 36 (see FIG. 2, etc.) (an end of the first fuel gas flow field 36 on the downstream side adjacent to the fuel gas discharge passage 32b and/or an end of the first fuel gas flow field 36 on the downstream side adjacent to the oxygen-containing gas discharge passage 30b) has been clogged with water.

Further, if it is determined that the end of the first fuel gas flow field 36 on the downstream side adjacent to the fuel gas discharge passage 32b has been clogged with water, the controller 16 firstly closes the variable throttle valve 132e, and reduces the opening degree of the variable throttle valve 132b. Thus, the flow of the coolant discharged into the coolant discharge passage 34b adjacent to the fuel gas discharge passage 32b is limited, and it is possible to increase the temperature in the area adjacent to the fuel gas discharge passage 32b.

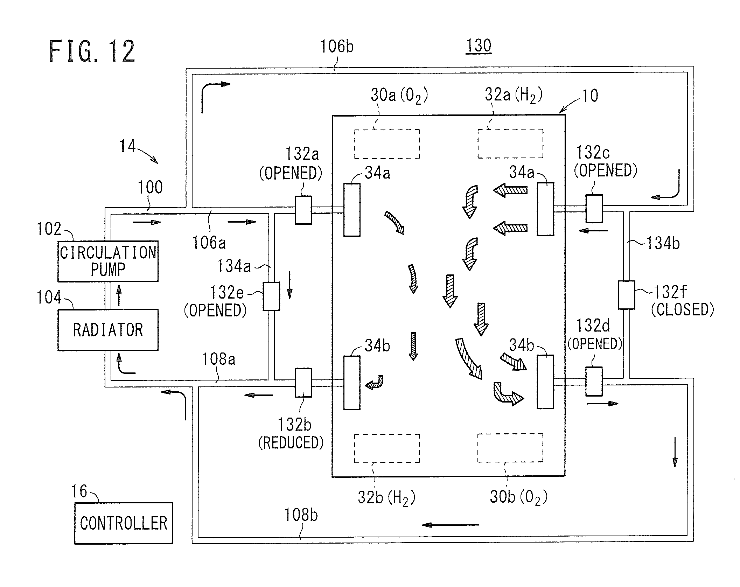

In a case where, even after the above processing, the condensed water which is retained as stagnant water in the area adjacent to the fuel gas discharge passage 32b is not removed, as shown in FIG. 12, the controller 16 opens the variable throttle valve 132e to connect the first supply channel 106a and the first discharge channel 108a through the first branch channel 134a. In the meanwhile, the opening degree of the variable throttle valve 132b is reduced.

Therefore, the coolant flows easily along the first branch channel 134a where the pressure loss is small in comparison with the inside of the fuel cell stack 10, and it is possible to limit the flow of the coolant in the coolant discharge passage 34b adjacent to the fuel gas discharge passage 32b.

Thus, in the power generation surface, the flow rate of the coolant flowing in the area adjacent to the fuel gas discharge passage 32b is reduced, and it is possible to increase the temperature in the area adjacent to the fuel gas discharge passage 32b. As a result, the condensed water which is retained as stagnant water in the area adjacent to the fuel gas discharge passage 32b is discharged easily and suitably, and it is possible to remove the stagnant water.

Accordingly, in particular, during low load power generation, it is possible to reliably prevent the condensed water from being retained as stagnant water in the area adjacent to the fuel gas discharge passage 32b. In the structure, a desired power generation state is achieved advantageously. Further, also in the second fuel gas flow field 58, the same advantages as in the case of the first fuel gas flow field 36 are obtained.

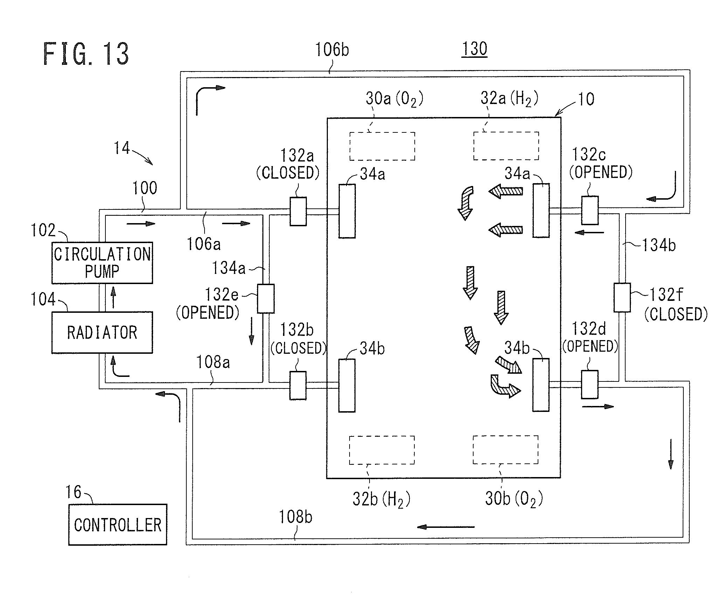

Further, in the third embodiment, if it is determined that an end of the first fuel gas flow field 36 on the downstream side adjacent to the fuel gas discharge passage 32b has been clogged with water, the variable throttle valves 132a, 132b may be closed as shown in FIG. 13. Therefore, the coolant flows from the first supply channel 106a through the first branch channel 134a, and then, the coolant is discharged into the first discharge channel 108a. The flow of coolant through one of long sides where the oxygen-containing gas supply passage 30a and the fuel gas discharge passage 32b are provided is limited.

Thus, in the power generation surface, the coolant flows along the other of the long sides where the fuel gas supply passage 32a and the oxygen-containing gas discharge passage 30b are provided, and it is possible to increase the temperature in the area adjacent to the fuel gas discharge passage 32b. Thus, the same advantages as described above are obtained. For example, in particular, during low load power generation, it is possible to reliably prevent the condensed water from being retained as stagnant water in the area adjacent to the fuel gas discharge passage 32b, and a desired power generation state is achieved.

Further, in the first fuel gas flow field 36, the humidified fuel gas is supplied to the fuel gas supply passage 32a, and dew condensation water tends to flow into the first fuel gas flow field 36 easily depending on the degree of humidification or the like. The dew condensation water flows downward in the direction of gravity, and tends to be retained as stagnant water in a portion of the first fuel gas flow field 36 on the downstream side, specifically, in the area adjacent to (above) the oxygen-containing gas discharge passage 30b.

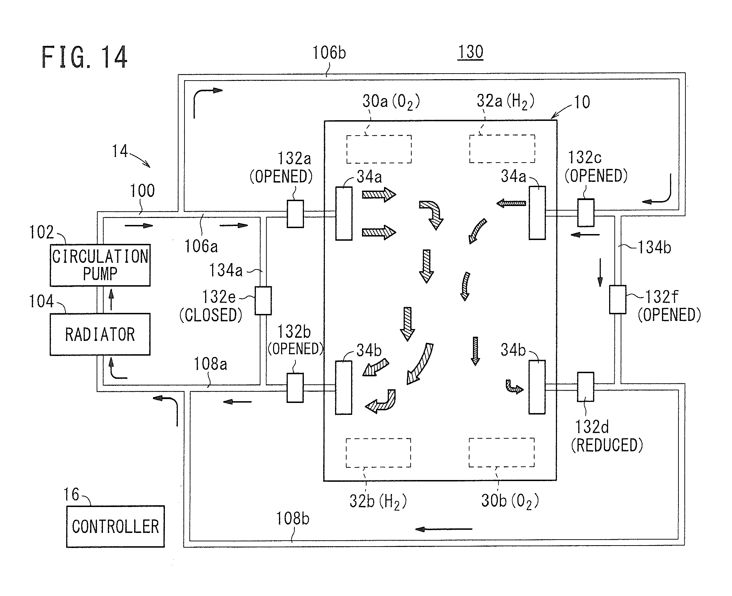

Thus, if it is determined that an end of the first fuel gas flow field 36 on the downstream side corresponding to the oxygen-containing gas discharge passage 30b has been clogged with water, the controller 16 opens the variable throttle valve 132f, as shown in FIG. 14, to connect the second supply channel 106b and the second discharge channel 108b through the second branch channel 134b. At this time, the opening degree of the variable throttle valve 132d is reduced.

Therefore, the coolant tends to flow easily along the second branch channel 134b where the pressure loss is relatively small, and it becomes possible to limit the flow of the coolant in the coolant discharge passage 34b adjacent to the oxygen-containing gas discharge passage 30b.

Thus, in the power generation surface, the flow rate of the coolant flowing in the area adjacent to the oxygen-containing gas discharge passage 30b is reduced, and it is possible to increase the temperature in the area adjacent to the oxygen-containing gas discharge passage 30b. Thus, in the first fuel gas flow field 36 (and the second fuel gas flow field 58), the condensed water which is retained as stagnant water in the area adjacent to the oxygen-containing gas discharge passage 30b is discharged easily and suitably, and it is possible to remove the stagnant water. Further, as necessary, the variable throttle valves 132c, 132d may be closed.

Further, in the third embodiment, the opening degrees of the variable throttle valves 132a to 132f are controlled suitably. Thus, for example, in the case where the voltage during low load power generation becomes unstable, by opening the variable throttle valves 132e, 132f to change the temperature of the fuel cell stack 10, it becomes possible to suppress dew condensation or flooding of water.

Further, in the third embodiment, the coolant supply apparatus 14 is provided at one end of the fuel cell stack 10 in the stacking direction. In the structure, the coolant may not be supplied sufficiently to the power generation units 18 at the other end side of fuel cell stack 10 in the stacking direction.

In an attempt to address the problem, in the third embodiment, the variable throttle valves 132e, 132f are closed by the controller 16, and the opening degrees of the variable throttle valves 132b, 132d are reduced. Thus, in each of the coolant flow fields 44, the pressure loss at the pair of coolant discharge passages 34b becomes high, and it becomes possible to sufficiently supply the coolant to the coolant flow fields 44 provided at the other end side of the fuel cell stack 10 in the stacking direction.

In the structure, for example, during high load power generation, in the power generation units 18 at the other end side of the fuel cell stack 10 in the stacking direction, the power generation performance is not degraded due to insufficient cooling. Further, it is possible to effectively suppress temperature increase in the area adjacent to the oxygen-containing gas discharge passage 30b.

## Claims

1. An operation method for a fuel cell formed by stacking an electrolyte electrode assembly (22a) and a separator (20) having rectangular flat surfaces in a stacking direction, the electrolyte electrode assembly (22a) including a pair of electrodes (92, 94) and an electrolyte (90) interposed between the electrodes (92, 94), a reactant gas supply passage and a reactant gas discharge passage extending through one pair of two opposite sides of the separator (20) in the stacking direction, the reactant gas supply passage and the reactant gas discharge passage being connected to a reactant gas flow field for allowing a reactant gas to flow along an electrode surface, a pair of coolant supply passages (34a) and a pair of coolant discharge passages (34b) allowing a coolant to flow therethrough and extending through the other pair of two opposite sides of the separator (20) at least at positions adjacent to the reactant gas supply passage or the reactant gas discharge passage, the pair of coolant supply passages (34a) being disposed separately on the two opposite sides and the pair of coolant discharge passages (34b) being disposed separately on the two opposite sides, the method comprising the steps of:
detecting whether or not at least a portion of a fuel gas flow field (36) serving as the reactant gas flow field where a fuel gas as the reactant gas flows has been clogged with water; and
if it is determined that at least a portion of the fuel gas flow field (36) has been clogged with the water, limiting the flow of the coolant to the coolant discharge passage (34b) adjacent to the reactant gas discharge passage.

2. The operation method according to claim 1, wherein the reactant gas discharge passage is a fuel gas discharge passage (32b).

3. The operation method according to claim 2, wherein, if it is determined that at least a portion of the fuel gas flow field (36) has been clogged with the water, the flow of the coolant from the coolant supply passage (34a) that is provided on the same side as the coolant discharge passage (34b) adjacent to the fuel gas discharge passage (32b) is limited.

4. The operation method according to claim 2, wherein the fuel cell is formed by stacking power generation units (18) each formed by stacking the electrolyte electrode assemblies (22a) and the separators (20) alternately twice or more; and
a coolant flow field (44) is formed between the power generation units (18).

5. The operation method according to claim 1, wherein a fuel gas supply passage (32a) and an oxygen-containing gas supply passage (30a) extend through one side of the one pair of two opposite sides of the separator (20) in the stacking direction, and a fuel gas discharge passage (32b) and an oxygen-containing gas discharge passage (30b) extend through the other side of the one pair of two opposite sides of the separator (20) in the stacking direction; and
the method comprises the step of, if it is determined that at least a portion of the fuel gas flow field (36) on the downstream side has been clogged with the water, limiting the flow of the coolant to the coolant discharge passage (34b) adjacent to the oxygen-containing gas discharge passage (30b).

6. The operation method according to claim 5, wherein, if it is determined that a portion of the fuel gas flow field (36) on the downstream side and nearer to the oxygen-containing gas discharge passage (30b) than the fuel gas discharge passage (32b) has been clogged with the water, the flow of the coolant to the coolant discharge passage (34b) adjacent to the oxygen-containing gas discharge passage (30b) is limited.

7. The operation method according to claim 5, wherein the fuel cell is formed by stacking power generation units (18) each formed by stacking the electrolyte electrode assemblies (22a) and the separators (20) alternately twice or more; and
a coolant flow field (44) for allowing the coolant to flow along the electrode surface is formed between the power generation units (18).

8. An operation method for a fuel cell formed by stacking an electrolyte electrode assembly (22a) and a separator (20) having rectangular flat surfaces in a stacking direction, the electrolyte electrode assembly (22a) including a pair of electrodes (92, 94) and an electrolyte (90) interposed between the electrodes (92, 94), a reactant gas supply passage and a reactant gas discharge passage extending through one pair of two opposite sides of the separator (20) in the stacking direction, the reactant gas supply passage and the reactant gas discharge passage being connected to a reactant gas flow field for allowing a reactant gas to flow along an electrode surface, at least a pair of coolant supply passages (34a) and at least a pair of coolant discharge passages (34b) allowing a coolant to flow therethrough and extending through the other pair of two opposite sides of the separator (20) in the stacking direction at least at positions adjacent to the reactant gas supply passage or the reactant gas discharge passage, the pair of coolant supply passages (34a) being disposed separately on the two opposite sides and the pair of coolant discharge passages (34b) being disposed separately on the two opposite sides, the method comprising the steps of:
detecting whether or not at least a portion of the reactant gas flow field has been clogged with water; and
if it is determined that at least a portion of the reactant gas flow field has been clogged with the water, at least implementing control to supply the coolant to the coolant supply passages (34a) at different flow rates or discharge the coolant from the coolant discharge passages (34b) at different flow rates.

9. The operation method according to claim 8, wherein, if it is determined that at least a portion of the reactant gas flow field has been clogged with the water, the flow of the coolant to the coolant discharge passage (34b) adjacent to the fuel gas discharge passage (32b) or the oxygen-containing gas discharge passage (30b), which is the reactant gas discharge passage, is limited, and
the flow of the coolant from the coolant supply passage (34a) on the same side as the coolant discharge passage (34b) in which the flow of the coolant is limited is limited.

10. The operation method according to claim 8, wherein the fuel cell is formed by stacking power generation units (18) each formed by stacking the electrolyte electrode assemblies (22a) and the separators (20) alternately twice or more; and
the coolant flow field (44) is formed between the power generation units (18).

11. A fuel cell system including a fuel cell formed by stacking an electrolyte electrode assembly (22a) and a separator (20) having rectangular flat surfaces in a stacking direction, the electrolyte electrode assembly (22a) including a pair of electrodes (92, 94) and an electrolyte (90) interposed between the electrodes (92, 94), a reactant gas supply passage and a reactant gas discharge passage extending through one pair of two opposite sides of the separator (20) in the stacking direction, the reactant gas supply passage and the reactant gas discharge passage being connected to a reactant gas flow field for allowing a reactant gas to flow along an electrode surface, at least a pair of coolant supply passages (34a) and at least a pair of coolant discharge passages (34b) allowing a coolant to flow therethrough and extending through the other pair of two opposite sides of the separator (20) in the stacking direction at least at positions adjacent to the reactant gas supply passage or the reactant gas discharge passage, the pair of coolant supply passages (34a) being disposed separately on the two opposite sides and the pair of coolant discharge passages (34b) being disposed separately on the two opposite sides, the fuel cell system comprising:
a first supply channel (106a) and a first discharge channel (108a) connected respectively to the coolant supply passage (34a) and the coolant discharge passage (34b) that are disposed on a first side of the other pair of two opposite sides of the separator (20);
a second supply channel (106b) and a second discharge channel (108b) connected respectively to the coolant supply passage (34a) and the coolant discharge passage (34b) that are disposed on a second side of the other pair of two opposite sides of the separator (20);
a first branch channel (134a) connected to a middle portion of the first supply channel (106a) and a middle portion of the first discharge channel (108a);
a second branch channel (134b) connected to a middle portion of the second supply channel (106b) and a middle portion of the second discharge channel (108b);
valve mechanisms (132e, 132f) provided at least in the first branch channel (134a) and the second branch channel (134b), respectively; and
a controller (16) for determining whether or not at least a portion of the reactant gas flow field has been clogged with water.

12. The fuel cell system according to claim 11, wherein valve mechanisms are provided at least in the first supply channel (106a) and the second supply channel (106b) or in the first discharge channel (108a) and the second discharge channel (108b).

13. The fuel cell system according to claim 11, wherein the valve mechanisms include variable throttle valves (132a to 132d).

14. The fuel cell system according to claim 11, wherein the valve mechanisms include three-way valves (110a, 110b, 112a, 112b).

15. The operation system according to claim 11, wherein the fuel cell is formed by stacking power generation units (18) by stacking the electrolyte electrode assemblies (22a) and the separators (20) alternately twice or more; and
the coolant flow field (44) is formed between the power generation units (18).
